# FASCICULE DE BREVET EUROPEEN

(11) **EP 2 050 491 B1**
(45) Date de publication et mention de la délivrance du brevet: **02.06.2010**
(21) Numéro de dépôt: 08356134.0
(22) Date de dépôt: 13.10.2008
(51) Int. Cl.: B01D 45/16, B04C 11/00, F01M 13/04

(54) **Dispositif de purification par centrifugation d'un fluide comportant un gaz et des particules d'huile**
Reinigungsvorrichtung durch Zentrifugieren für ein Fluid, das ein Gas und Ölpartikel enthält
Device for purifying a fluid comprising a gas and oil particles by centrifugation

(30) Priorité: 15.10.2007 FR 0707208
(43) Date de publication de la demande: 22.04.2009
(73) Titulaire: Mécaplast, 98014 Monaco (MC)
(72) Inventeur: Akiki, Rony, 62300 Lens (FR); Baclet, René, 69199 Gosnay (FR)
(74) Mandataire: Goreaud, Alexandra

(56) Documents cités:
- EP-A- 1 477 641
- WO-A-2005/049176
- FR-A- 2 857 274
- GB-A- 2 171 617

## Description

La présente invention concerne un dispositif de purification par centrifugation d'un fluide comportant un gaz et des particules d'huile.

L'invention trouve notamment son application dans le déshuilage des gaz provenant du carter moteur d'un véhicule automobile. En effet, dans un moteur à combustion interne, les fuites de gaz (« blow by ») sont classiquement aspirées depuis le carter vers le système d'admission d'air frais et sont ensuite dirigées dans la chambre de combustion.

Toutefois, ces gaz sont chargés de particules d'huile en suspension collectées dans le moteur. Pour répondre aux normes anti pollution, il est donc nécessaire de débarrasser ces gaz des particules d'huile afin de réduire la consommation d'huile, d'optimiser la combustion et de réduire la pollution. Ainsi, il est connu de placer un dispositif de purification de fluide entre le carter moteur et le système d'admission des gaz du moteur.

Le document EP 1 684 888 décrit plusieurs modes de réalisation d'un dispositif de purification par centrifugation. Ce dispositif de purification comprend une chemise globalement cylindrique dans laquelle est monté un corps globalement cylindrique coaxial présentant des saillies hélicoïdales formant une hélice. Ainsi, le fluide introduit entre le corps et la chemise est centrifugé par l'hélice et débarrassé de ses particules d'huile.

Selon un premier mode de réalisation proposé par ce document, le corps est monté de façon fixe dans la chemise. Par conséquent, chacune des zones dans lesquelles le fluide circule possède des dimensions constantes. Ceci ne permet pas d'obtenir un fonctionnement optimal du dispositif de purification.

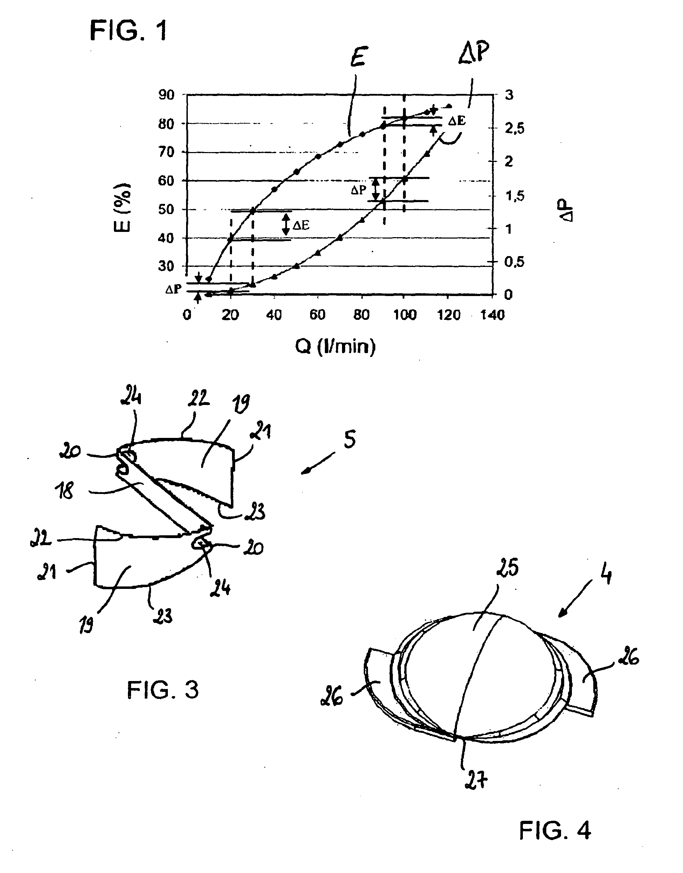

En effet, comme illustré sur le graphique de la figure 1, lorsque le débit Q du fluide augmente (le débit des gaz de « blow by » peut typiquement varier entre 10 et 200 I/min), on a à la fois une augmentation de l'efficacité E de la séparation gaz/huile et une augmentation des pertes de charge ΔP. Toutefois, les lois de variation de E et de ΔP en fonction de Q sont différentes. Ainsi, à faible débit, les pertes de charge sont faibles, mais l'efficacité n'est pas suffisante pour que l'on obtienne une séparation satisfaisante. A l'inverse, à haut débit, l'efficacité est élevée, mais les pertes de charge sont trop importantes.

En conséquence, le dispositif selon le premier mode de réalisation du document EP 1 684 888 ne donne pas entière satisfaction dans toute la gamme possible des débits de fluide entrant dans le dispositif.

Selon un deuxième mode de réalisation proposé par ce document, la chemise possède deux portions de diamètres différents et le corps est monté mobile en translation axiale dans la chemise. Le corps est maintenu dans une position de repos par un ressort, la zone de circulation du fluide à purifier présentant alors une première section. Lorsque le débit du fluide augmente, le corps est poussé axialement à l'encontre de la force du ressort, et la zone de circulation du fluide à purifier présente alors une deuxième section, supérieure à la première. Ceci permet de diminuer la vitesse du fluide, donc les pertes de charge. L'efficacité de la centrifugation diminue également, mais dans une moindre mesure compte tenu de la forme des courbes représentées sur la figure 1.

Ce deuxième mode de réalisation représente une amélioration par rapport au premier, mais présente néanmoins un certain nombre d'inconvénients, parmi lesquels on peut citer :
- l'influence importante de la gravité qui, du fait du poids du corps, peut conduire à une déformation permanente du ressort après un certain temps, et donc à une position de repos modifiée du corps par rapport à la chemise ;
- la difficulté, voire l'impossibilité de réguler de façon continue et fine les dimensions de la zone de circulation du fluide à purifier ;
- la complexité structurelle du dispositif (corps et chemise non cylindriques, réglage du positionnement relatif au repos de ces deux éléments).

Par ailleurs, le document EP 1 477 641 décrit un dispositif de centrifugation comportant une chemise dans laquelle est disposé un cylindre pourvu d'une hélice. Dans le canal de passage hélicoïdal ainsi défini est placé, contre le cylindre central, un élément dont le volume peut varier en fonction de la pression régnant dans le reste du canal.

La présente invention vise à remédier aux inconvénients mentionnés ci-dessus, en fournissant un dispositif de purification dont le fonctionnement est optimisé automatiquement quel que soit le débit du fluide entrant.

A cet effet, l'invention concerne un dispositif de purification par centrifugation d'un fluide comportant un gaz et des particules d'huile, le dispositif possédant une structure fixe comprenant :
- une chemise sensiblement cylindrique présentant un axe, une première extrémité axiale ouverte d'entrée du fluide à purifier et une deuxième extrémité axiale ouverte de sortie du gaz purifié ;
- un corps monté de façon fixe dans la chemise, comprenant :
   - une portion sensiblement cylindrique, de même axe que la chemise et possédant un diamètre extérieur inférieur au diamètre intérieur de la chemise ;
   - au moins une saillie hélicoïdale ménagée sur la face extérieure de la portion cylindrique et s'étendant sensiblement jusqu'à la face intérieure de la chemise ;
une zone de circulation de fluide étant ainsi définie le long de la saillie hélicoïdale entre le corps et la chemise, pour permettre la centrifugation du fluide.

Le dispositif comprend en outre au moins un organe mobile monté sur la structure, dans la zone de circulation, ledit organe étant agencé pour former dans ladite zone de circulation, lorsqu'il occupe une position de repos, un canal de circulation de fluide possédant une section moins importante que celle de la zone de circulation, ledit organe étant sollicité par des moyens élastiques vers sa position de repos et étant apte à être rabattu contre la structure, à l'encontre des moyens élastiques, par le passage du fluide, de sorte à augmenter la section du canal.

Selon une définition générale de l'invention, le bord amont de l'organe mobile est fixe par rapport à la structure et disposé sensiblement parallèlement à l'axe de la chemise, ledit bord amont formant un axe d'articulation de l'organe mobile entre sa position de repos et sa position rabattue.

En pratique, lorsque le débit du fluide à purifier est faible, l'organe mobile est sensiblement en position de repos, c'est-à-dire que le canal de circulation présente une section minimale. La vitesse du fluide à la sortie de la du canal de circulation tend donc à augmenter, ce qui permet d'augmenter l'efficacité de la centrifugation. En parallèle, on note bien sûr une augmentation des pertes de charge, mais beaucoup moins importante du fait des lois différentes de variation E(Q) et ΔP(Q), comme illustré sur la figure 1.

A l'inverse, lorsque le débit du fluide à purifier est élevé, l'organe mobile est rabattu contre la structure par le fluide, donc la section du canal de circulation est augmentée. En conséquence, la vitesse du fluide tend à diminuer, ce qui permet de diminuer les pertes de charge. Ceci s'accompagne d'une diminution de l'efficacité, mais d'une amplitude bien moindre, également du fait des lois différentes de variation E(Q) et ΔP(Q).

Grâce à l'organe mobile, on peut réaliser une régulation automatique de la section du canal en fonction du débit du fluide entrant. Avantageusement, l'organe mobile est distinct de la structure fixe du dispositif.

Le dispositif selon l'invention permet donc d'atteindre une vitesse de fluide « moyenne », correspondant à la portion centrale du graphique de la figure 1 dans laquelle le rapport efficacité E / pertes de charge ΔP est optimal (le plus grand possible). Ainsi, quel que soit le débit du fluide à purifier, en entrée du dispositif, on se rapproche d'une vitesse optimale de fluide, de façon autorégulée, ce qui permet d'atteindre un point d'équilibre très satisfaisant.

On peut avoir un bord amont de l'organe mobile disposé contre la structure, et un bord aval situé à distance de la structure.

Les termes « amont » et « aval » s'entendent par rapport au sens de circulation du fluide.

Selon une réalisation possible, l'organe mobile peut se présenter sous la forme d'une pièce mince courbée, disposée entre la chemise et le corps, la courbure dudit organe suivant sensiblement la forme cylindrique de la chemise et du corps.

Avantageusement, le bord inférieur de l'organe mobile peut posséder une forme correspondante à celle de la face supérieure de la saillie hélicoïdale, ledit bord inférieur étant disposé à proximité immédiate de la saillie hélicoïdale.

Les termes « supérieur », « inférieur », « hauteur » sont employés par rapport à l'axe du dispositif, le terme « supérieur » se rapportant au côté par lequel le fluide à purifier entre dans le dispositif, et le terme « inférieur » étant relatif au côté par lequel le gaz purifié sort du dispositif. Ceci correspond à la position du dispositif tel qu'illustré sur les figures, mais il est entendu que le dispositif peut occuper n'importe quelle position dans l'espace, dans la mesure où la purification résulte d'une centrifugation et n'est pas obtenue par l'effet de la gravité.

Par exemple, l'organe mobile est monté sur le corps et est agencé pour pouvoir être rabattu contre le corps par le passage du fluide.

Selon une réalisation possible, l'organe mobile est articulé de façon élastique et par l'un de ses bords à une âme mince montée de façon fixe sur la structure, l'organe mobile et l'âme étant réalisés d'une seule pièce et formant une lame ressort. Dans ce cas, l'organe mobile et/ou l'âme peut comporter, dans la zone de jonction avec l'âme, respectivement avec l'organe mobile, un orifice permettant de réaliser une articulation élastique.

Avantageusement, il peut être prévu que le corps comprenne N saillies hélicoïdales de pas identiques, où N > 1, les extrémités amont des saillies étant situées au voisinage de l'extrémité supérieure du corps et régulièrement espacées sur la circonférence dudit corps. Une forme de réalisation dans laquelle le corps est doté d'une unique saillie hélicoïdale peut également être envisagée.

Les hélices s'étendent sur une distance axiale supérieure à la moitié de la hauteur axiale du corps, mais inférieure à la hauteur axiale du corps, de façon à ménager une zone inférieure de la portion cylindrique dépourvue de saillies. Par exemple, les saillies peuvent s'étendre sur environ 180°/N.

Selon une réalisation possible, le corps comporte deux saillies hélicoïdales (N=2) et la lame ressort comporte deux organes mobiles articulés chacun à une extrémité de l'âme de façon à former sensiblement un S, l'âme étant montée dans une fente ménagée diamétralement dans le corps.

Il est précisé que la lame ressort équipée de ses deux organes mobiles peut être intégrée au corps.

En outre, la structure fixe peut comporter un élément de répartition du fluide monté en partie supérieure du corps et agencé pour diriger le fluide entrant vers le ou les canaux de circulation de fluide. La lame ressort équipée de ses deux organes mobiles peut être intégrée au corps pourrait être solidaire de l'élément de répartition.

L'élément de répartition du fluide comprend de préférence une partie bombée obturant l'extrémité axiale supérieure ouverte du corps

Par ailleurs, cet élément peut comprendre au moins un rebord localisé qui, en position montée, est apte à obturer en partie supérieure l'espace situé entre la structure et l'organe mobile, du côté opposé au canal de circulation de fluide, afin de limiter les pertes derrière l'organe mobile.

Selon une réalisation avantageuse, la ou les saillies s'étendent depuis le bord supérieur de la portion cylindrique du corps sur une distance axiale inférieure à la hauteur axiale du corps, de façon à ménager dans la partie inférieure de la portion cylindrique une zone dépourvue de saillies hélicoïdales. C'est dans cette zone en forme de couronne, ménagée entre la portion cylindrique du corps et la chemise, que le gaz, qui a été accéléré et orienté selon un flux tournant dans la partie comportant une ou plusieurs saillies, va subir la centrifugation.

On décrit à présent, à titre d'exemple non limitatif, un mode de réalisation possible de l'invention, en référence aux figures annexées :
La figure 1 est un graphique illustrant la variation de l'efficacité E de la centrifugation et des pertes de charge ΔP en fonction du débit Q du fluide à purifier ;
La figure 2 est une vue partielle en perspective éclatée du dispositif de purification selon l'invention ;
La figure 3 est une vue en perspective de la lame ressort ;
La figure 4 est une vue en perspective de l'élément de répartition du fluide ;
Les figures 5 et 6 sont des vues de la chemise, du corps et de la lame ressort en position montée, respectivement en perspective et en vue de dessus ;
La figure 7 est une vue partielle en perspective du corps monté dans la chemise, en l'absence de lame ressort ; et
Les figures 8 et 9 sont des vues partielles en perspective du dispositif.

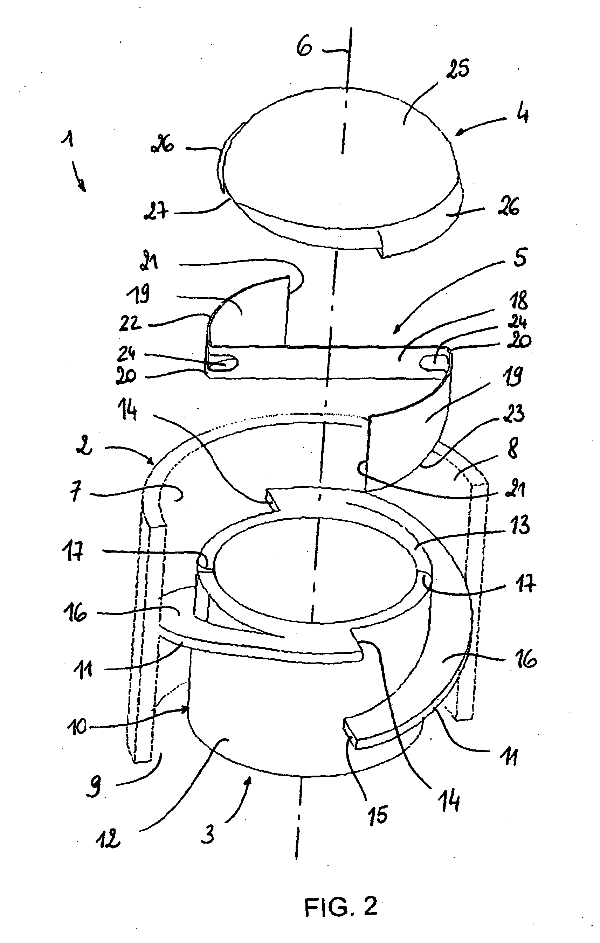

Comme illustré sur la figure 2, un dispositif 1 de purification selon l'invention comprend d'une part une structure fixe et rigide comportant une chemise 2, un corps 3 et un élément de répartition 4, et d'autre part une lame ressort 5 élastiquement déformable.

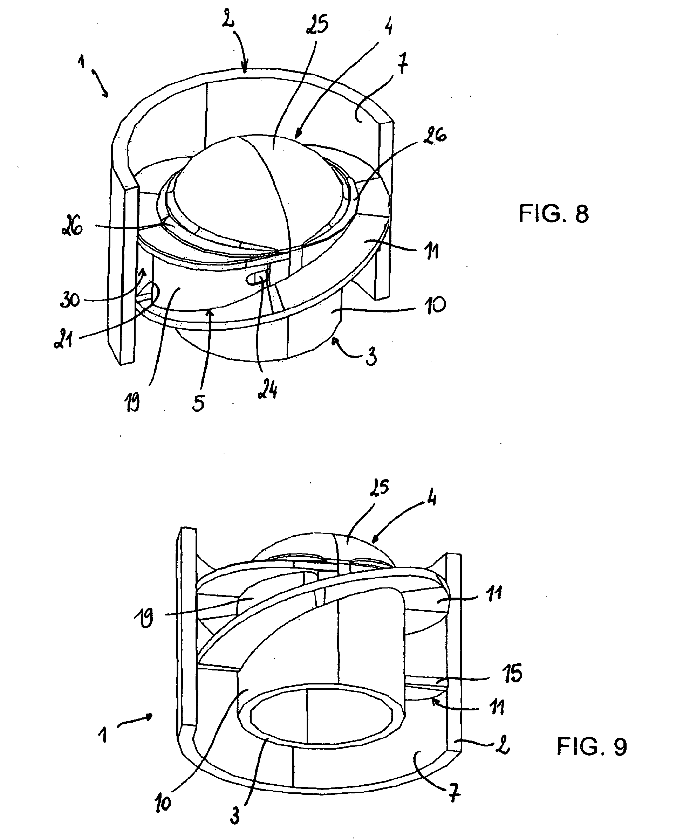

La chemise 2 est une pièce cylindrique, d'axe 6, présentant une face intérieure 7 et possédant une première et une deuxième extrémités axiales ouvertes 8, 9. La chemise 2 est par exemple réalisée par moulage d'une matière plastique. La hauteur de la chemise 2 est de préférence telle qu'elle contient toutes les autres parties constitutives du dispositif 1, qui ne dépassent pas hors de la chemise (voir figures 8 et 9).

Le corps 3 est destiné à être monté de façon fixe dans la chemise 2. Il comprend une portion cylindrique 10 de même axe 6 que la chemise 2 (en position montée), ouverte à ses deux extrémités axiales, et de diamètre extérieur inférieur au diamètre intérieur de la chemise 2. La hauteur axiale du corps 3 est de préférence inférieure à celle de la chemise 2.

Le corps 3 comprend, en outre, au moins une saillie hélicoïdale et, comme cela apparaît sur les figures, peut comprendre deux saillies hélicoïdales 11 ménagées sur la face extérieure 12 de la portion cylindrique 10, et formant une hélice à deux pales. Chaque saillie hélicoïdale 11 s'étend depuis le bord supérieur 13 de la portion cylindrique 10, sur environ 180°, et sur une distance axiale supérieure à la moitié de la hauteur du corps 3 mais inférieure à la hauteur axiale du corps 3, de façon à ménager dans la partie inférieure de la portion cylindrique 10 une zone dépourvue de saillies hélicoïdales 11. En outre, chaque saillie hélicoïdale 11 s'étend sensiblement jusqu'à la face intérieure 7 de la chemise 2. Les extrémités amont 14 des saillies hélicoïdales 11 sont sensiblement diamétralement opposées, de même que les extrémités aval 15. Selon une réalisation possible, la face supérieure 16 des saillies hélicoïdales 11 est sensiblement plate, et peut en outre être lisse.

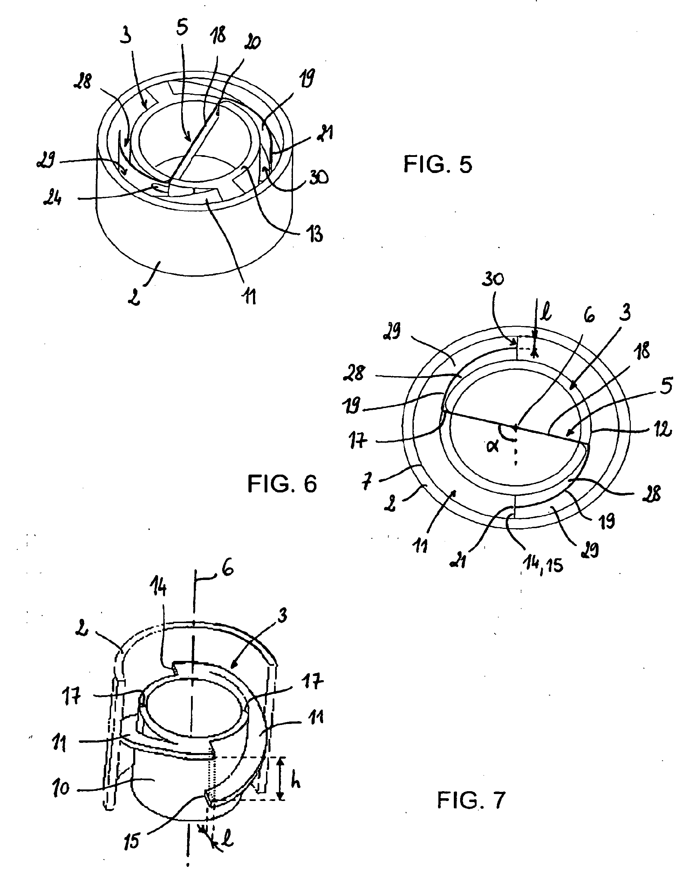

Enfin, dans la portion cylindrique 10 du corps 3 sont pratiquées deux fentes 17, orientées selon un même diamètre et s'ouvrant sur le bord supérieur 13 de la portion cylindrique 10. L'angle α entre l'extrémité amont 14 d'une saillie hélicoïdale 11 et la fente 17 située immédiatement en aval de cette extrémité, est supérieur à 90° et par exemple de l'ordre de 100° (voir figure 6). Une fente 17 s'étend axialement sensiblement jusqu'à la face supérieure 16 de la saillie hélicoïdale 11 correspondante.

Le corps 3 (à savoir la portion cylindrique 10 et les saillies hélicoïdales 11) peut être réalisé d'une seule pièce, par exemple en plastique moulé.

La lame ressort 5 est réalisée d'une seule pièce mince, par exemple en métal ou en matière plastique. Elle peut présenter une épaisseur de l'ordre de 0,1 mm. La lame ressort 5 comporte une âme centrale 18 sensiblement rectangulaire, de longueur sensiblement égale au diamètre extérieur du corps 3 et, à chacune de ses extrémités longitudinales, un volet 19 courbe. Les volets 19, qui sont sensiblement identiques, s'étendent à partir de l'âme 18 dans des sens opposés, de sorte que la lame ressort 5 présente une forme de S symétrique. Chaque volet 19 comporte un bord amont 20, par lequel il est lié à l'âme 18, un bord aval 21, un bord supérieur 22 sensiblement perpendiculaire à l'axe 6 (en position montée) et un bord inférieur 23 non parallèle au bord supérieur 22 et tel que la hauteur du volet 19 augmente depuis son bord amont 20 en direction de son bord aval 21. Un orifice 24 oblong est pratiqué dans l'âme 18 et chaque volet 19, au voisinage du bord amont 20 de chaque volet 19. Cet orifice 24, combiné à la minceur de la lame ressort 5, permet à chaque volet 19 d'être articulé par rapport à l'âme 18 autour de l'axe formé par le bord amont 20 correspondant.

En position montée de la lame ressort 5 sur le corps 3 (voir notamment les figures 5 et 6), l'âme 18 est logée dans les fentes 17, l'âme 18 et les bords amont 20 et aval 21 du volet 19 s'étendant donc sensiblement verticalement (cas de la position illustrée sur les figures). Le bord supérieur de la lame ressort 5 est situé sensiblement dans le même plan que le bord supérieur 13 de la portion cylindrique 10 du corps 3.

Les volets 19 sont situés dans l'espace annulaire ménagé entre le corps 3 et la chemise 2, chacun au-dessus d'une saillie hélicoïdale 11. Le bord amont 20 d'un volet est situé sensiblement contre la face extérieure 12 de la portion cylindrique 10 du corps 3. La courbure du volet 19 correspond globalement à la forme cylindrique du corps 3 et de la chemise 2. De plus, le bord inférieur 23 d'un volet 19 suit sensiblement la forme de la face supérieure 16 de la saillie hélicoïdale 11 correspondante, à proximité immédiate. Le bord aval 21 est situé sensiblement au droit de l'extrémité aval 15 de ladite saillie hélicoïdale 11, à distance du corps 3 et de la chemise 2, en position de repos, c'est-à-dire lorsque aucun fluide ne circule dans le dispositif 1 de purification.

L'élément de répartition 4, plus particulièrement représenté sur les figures 2 et 4, est destiné à être placé sur le corps 3, par exemple par clipsage, de façon à obturer son extrémité axiale supérieure ouverte et à assurer la fixation de la lame ressort 5.

L'élément de répartition 4 comporte une partie bombée 25 d'axe 6 et de diamètre sensiblement égal au diamètre extérieur de la portion cylindrique 10 du corps 3. De plus, l'élément de répartition 4 comporte deux rebords 26 s'étendant depuis le bord circulaire 27 de la partie bombée 25, globalement dans un plan perpendiculaire à l'axe 6, chacun sur une portion localisée de la périphérie de l'élément 4. Les deux rebords 26, sensiblement identiques et diamétralement opposés, sont dimensionnés pour obturer chacun, en partie supérieure, l'espace 28 situé entre le volet 19 correspondant et la portion cylindrique 10 du corps 3.

Chaque volet 19 définit en outre, du côté opposé à l'espace 28, un canal 29 de circulation de fluide qui est ouvert à sa partie supérieure et à ses extrémités amont et aval, et qui est délimité par le volet 19, la face intérieure 7 de la chemise 2 et la face supérieure 16 de la saillie hélicoïdale 11. La section du canal 29 est donc inférieure à la section par laquelle le fluide pourrait circuler en l'absence de lame ressort 5.

Le fonctionnement du dispositif 1 de purification est décrit ci-après.

Le fluide à purifier (gaz et particules d'huile) entre dans le dispositif 1 depuis la première extrémité axiale 8 de la chemise 2, non nécessairement axialement. Le fluide rencontre la partie bombée 25 (surface convexe) de l'élément de répartition 4, et se trouve ainsi dirigé dans l'espace annulaire ménagé entre le corps 3 et la chemise 2, l'élément 4 assurant de plus la répartition du fluide entrant sur les deux saillies hélicoïdales 11, dans les deux canaux 29.

Les saillies hélicoïdales 11 créent un mouvement de rotation qui accélère le fluide dans la partie cylindrique 10 du corps 3 dépourvue de saillies hélicoïdales 11, en amont de l'extrémité amont 15 de ces saillies. On a ainsi séparation du gaz et des particules d'huile centrifugées, qui viennent se déposer contre la face intérieure 7 de la chemise 2. Eventuellement, il peut être prévu un dispositif de collecte et/ou d'évacuation des particules d'huile ainsi déposées, comme une gorge. De plus, la face intérieure 7 de la chemise 2 peut présenter un traitement de surface approprié, permettant de favoriser la coalescence des particules d'huile et/ou leur glissement vers le dispositif de collecte.

L'accélération du fluide est fonction de la taille des fenêtres de passage 30, c'est-à-dire de l'ouverture amont des canaux 29. La hauteur h de la fenêtre 30 est définie par le pas des saillies hélicoïdales 11 et la largeur I est variable, en fonction de la position du volet mobile 19.

La raideur de la lame ressort 5 définit la loi de déplacement du volet 19 en fonction du débit de fluide circulant dans le canal 29. Lorsque le débit est peu important, le volet 19 n'est pratiquement pas déplacé par le fluide par rapport à sa position de repos. Les fenêtres 30 sont alors de petites dimensions, et le fluide est accéléré de façon importante, ce qui augmente l'efficacité de la centrifugation. Au contraire, lorsque le débit est élevé, le fluide provoque le placage des volets 19 contre la face extérieure 12 de la portion cylindrique 10 du corps 3, augmentant ainsi la largeur des fenêtres 30. L'accélération du fluide est moindre, et donc les pertes de charge diminuent.

Bien entendu, l'homme du métier comprendra que la lame ressort est dimensionnée pour que la variation de la largeur de la fenêtre 30, sous l'effet du passage du fluide, permette d'obtenir un rapport efficacité / pertes de charge optimal.

Ainsi, l'invention apporte une amélioration déterminante à la technique antérieure, en fournissant un dispositif de purification autorégulé qui fonctionne de façon optimale quel que soit le débit du fluide à purifier entrant.

Il va de soi que l'invention n'est pas limitée au mode de réalisation décrit ci-dessus à titre d'exemple mais qu'elle en embrasse au contraire toutes les variantes de réalisation. Par exemple, en variante, il est possible pour obtenir un résultat similaire, de prévoir un corps et une chemise non pas cylindriques, mais coniques, de même axe et de même angle au sommet.

Il peut également être envisagé certains modes de réalisation dans lesquels la lame ressort et ses volets sont intégrés au corps 3 ou à l'élément de répartition 4.

L'invention peut être utilisée dans toute application nécessitant une séparation de gouttelettes liquides présentes en suspension dans un gaz.

## Revendications

1. Dispositif de purification par centrifugation d'un fluide comportant un gaz et des particules d'huile, le dispositif (1) possédant une structure fixe comprenant :
- une chemise (2) sensiblement cylindrique présentant un axe (6), une première extrémité axiale (8) ouverte d'entrée du fluide à purifier et une deuxième extrémité axiale (9) ouverte de sortie du gaz purifié ;
- un corps (3) monté de façon fixe dans la chemise (2), comprenant :
- une portion sensiblement cylindrique (10), de même axe (6) que la chemise (2) et possédant un diamètre extérieur inférieur au diamètre intérieur de la chemise (2) ;
- au moins une saillie hélicoïdale (11) ménagée sur la face extérieure (12) de la portion cylindrique (10) et s'étendant sensiblement jusqu'à la face intérieure (7) de la chemise (2) ;
une zone de circulation de fluide étant ainsi définie le long de la saillie hélicoïdale (11) entre le corps (3) et la chemise (2), pour permettre la centrifugation du fluide ;
le dispositif (1) comprenant en outre au moins un organe mobile (19) monté sur la structure, dans la zone de circulation, ledit organe (19) étant agencé pour former dans ladite zone de circulation, lorsqu'il occupe une position de repos, un canal (29) de circulation de fluide possédant une section moins importante que celle de la zone de circulation, ledit organe (19) étant sollicité par des moyens élastiques vers sa position de repos et étant apte à être rabattu contre la structure, à l'encontre des moyens élastiques, par le passage du fluide, de sorte à augmenter la section du canal (29), **caractérisé en ce que** le bord amont (20) de l'organe mobile (19) est fixe par rapport à la structure et disposé sensiblement parallèlement à l'axe (6) de la chemise (2), ledit bord amont (20) formant un axe d'articulation de l'organe mobile (19) entre sa position de repos et sa position rabattue.

2. Dispositif de purification selon la revendication 1, **caractérisé en ce que** l'organe mobile (19) se présente sous la forme d'une pièce mince courbée, disposée entre la chemise (2) et le corps (3), la courbure dudit organe (19) suivant sensiblement la forme cylindrique de la chemise (2) et du corps (3).

3. Dispositif de purification selon la revendication 1 ou 2, **caractérisé en ce que** le bord inférieur (23) de l'organe mobile (19) possède une forme correspondante à celle de la face supérieure (16) de la saillie hélicoïdale (11), ledit bord inférieur (23) étant disposé à proximité immédiate de la saillie hélicoïdale (11).

4. Dispositif de purification selon l'une des revendications 1 à 3, **caractérisé en ce que** l'organe mobile (19) est monté sur le corps (3) et est agencé pour pouvoir être rabattu contre le corps (3) par le passage du fluide.

5. Dispositif de purification selon l'une des revendications 2 à 4, **caractérisé en ce que** l'organe mobile (19) est articulé de façon élastique et par l'un de ses bords (20) à une âme (18) mince montée de façon fixe sur la structure, l'organe mobile (19) et l'âme (18) étant réalisés d'une seule pièce et formant une lame ressort (5).

6. Dispositif de purification selon la revendication 5, **caractérisé en ce que** l'organe mobile (19) et/ou l'âme (18) comporte, dans la zone de jonction avec l'âme (18), respectivement avec l'organe mobile (19), un orifice (24) permettant de réaliser une articulation élastique.

7. Dispositif de purification selon l'une des revendications 1 à 6, **caractérisé en ce que** le corps (3) comprend N saillies hélicoïdales (11) de pas identiques, où N > 1, les extrémités amont (14) des saillies (11) étant situées au voisinage de l'extrémité supérieure (13) du corps (3) et régulièrement espacées sur la circonférence dudit corps (3).

8. Dispositif de purification selon la revendication 5 ou 6 et la revendication 7, **caractérisé en ce que** N=2 et **en ce que** la lame ressort (5) comporte deux organes mobiles (19) articulés chacun à une extrémité de l'âme (18) de façon à former sensiblement un S, l'âme (18) étant montée dans une fente (17) ménagée diamétralement dans le corps (3).

9. Dispositif de purification selon l'une des revendications 1 à 8, **caractérisé en ce que** la structure fixe comporte en outre un élément de répartition du fluide (4) monté en partie supérieure du corps (3) et agencé pour diriger le fluide entrant vers le ou les canaux (29) de circulation de fluide.

10. Dispositif de purification selon la revendication 9, **caractérisé en ce que** l'élément de répartition du fluide (4) comprend une partie bombée (25) obturant l'extrémité axiale supérieure ouverte du corps (3).

11. Dispositif de purification selon la revendication 9 ou 10 et la revendication 2, **caractérisé en ce que** l'élément de répartition du fluide (4) comprend au moins un rebord (26) localisé qui, en position montée, est apte à obturer en partie supérieure l'espace (28) situé entre la structure et l'organe mobile (19), du côté opposé au canal (30) de circulation de fluide.

12. Dispositif de purification selon l'une des revendications 1 à 11, **caractérisé en ce que** la ou les saillies (11) s'étendent depuis le bord supérieur (13) de la portion cylindrique (10) du corps (3) sur une distance axiale inférieure à la hauteur axiale du corps (3), de façon à ménager dans la partie inférieure de la portion cylindrique (10) une zone dépourvue de saillies hélicoïdales.

## Claims

1. A device for purifying by centrifugation a fluid including a gas and oil partic!es, the device (1) having a fixed structure comprising:
- a substantially cylindrical sleeve (2) having an axis (6), a first open axial end (8) for inflow of the fluid to be purified and a second open axial end (9) for outflow of the purified gas;
- a body (3) fixedly mounted in the sleeve (2), comprising:
- a substantially cylindrical portion (10), with the same axis (6) as the sleeve (2) and having an outer diameter smaller than the inner diameter of the sleeve (2);
- at least one helical protrusion (11) made on the outer face (12) of the cylindrical portion (10) and substantially extending up to the inner face (7) of the sleeve (2);
a fluid circulation area being thereby defined along the helical protrusion (11) between the body (3) and the sleeve (2) for allowing centrifugation of the fluid;
the device (1) further comprising at least one mobile member (19) mounted on the structure, in the circulation area, said member (19) being laid out in order to form in said circulation area, when it occupies a rest position, a fluid circulation channel (29) having a less substantial section than that of the circulation area, said member (19) being urged by elastic means towards its rest position and being capable of being folded back against the structure, against the elastic means, by the passage of the fluid, so as to increase the section of the channel (29), **characterized in that** the upstream edge (20) of the mobile member (19) is fixed relatively to the structure and substantially positioned parallel to the axis (6) of the sleeve (2), said upstream edge (20) forming a joint axis of the mobile member (19) between its rest position and its folded-back position.

2. The purification device according to claim 1, **characterized in that** the mobile member (19) appears as a thin curved part, positioned between the sleeve (2) and the body (3), the curvature of said member (19) substantially following the cylindrical shape of the sleeve (2) and of the body (3).

3. The purification device according to any of claims 1 or 2, **characterized in that** the lower edge (23) of the mobile member (19) has a shape corresponding to that of the upper face (16) of the helical protrusion (11), said lower edge (23) being positioned in close proximity to the helical protrusion (11).

4. The purification device according to any of claims 1 to 3, **characterized in that** the mobile member (19) is mounted on the body (3) and is laid out so that it may be folded back against the body (3) by the passage of the fluid.

5. The purification device according to any of claims 2 to 4, **characterized in that** the mobile member (19) is elastically jointed and through one of its edges (20) to a thin core (18) fixedly mounted on the structure, the mobile member (19) and the core (18) being made in one single piece and forming a spring leaf (5).

6. The purification device according to claim 5, **characterized in that** the mobile member (19) and/or the core (18) includes, in the junction area with the core (18), respectively with the mobile member (19), an orifice (24) with which an elastic joint may be made.

7. The purification device according to any of claims 1 to 6, **characterized in that** the body (3) comprises N helical protrusions (11) with identical pitches, wherein N > 1, the upstream ends (14) of the protrusions (11) being located in the vicinity of the upper end (13) of the body (3) and regularly spaced out on the circumference of said body (3).

8. The purification device according to claim 5 or 6 and claim 7, **characterized in that** N = 2 and **in that** the spring leaf (5) includes two mobile members (19) each jointed to an end of the core (18) so as to substantially form an S, the core (18) being mounted in a slot (17) diametrically made in the body (3).

9. The purification device according to any of claims 1 to 8, **characterized in that** the fixed structure further includes an element for distributing the fluid (4), mounted in the upper portion of the body (3) and laid out so as to direct the inflowing fluid towards the fluid circulation channel(s) (29).

10. The purification device according to claim 9, **characterized in that** the element for distributing the fluid (4) comprises a convex portion (25) sealing the open upper axial end of the body (3).

11. The purification device according to claim 9 or 10 and claim 2, **characterized in that** the element for distributing the fluid (4) comprises at least one localized edge (26), which, in the mounted position, is capable of sealing in the upper portion the space (28) located between the structure and the mobile member (19), on the side opposite to the fluid circulation channel (30).

12. The purification device according to any of claims 1 to 11, **characterized in that** the protrusion(s) (11) extend(s) from the upper edge (13) of the cylindrical portion (10) of the body (3) over an axial distance smaller than the axial height of the body (3), so as to make an area without any helical protrusions in the lower part of the cylindrical portion (10).

## Patentansprüche

1. Reinigungsvorrichtung durch Zentrifugieren für ein Fluid, das ein Gas und Ölpartikel enthält, wobei die Vorrichtung (1) eine starre Struktur besitzt, die umfasst:
- einen etwa zylindrischen Mantel (2) mit einer Achse (6), einem ersten axialen offenen Ende (8) als Eingang für das zu reinigende Fluid und einem zweiten axialen offenen Ende (9) als Ausgang für das gereinigte Gas;
- einen Körper (3), der starr in dem Mantel (2) montiert ist, umfassend:
- einen etwa zylindrischen Abschnitt (10) mit derselben Achse (6) wie der Mantel (2) und einem Außendurchmesser, der kleiner ist als der Innendurchmesser des Mantels (2);
- mindestens einen schraubenförmigen Vorsprung (11) auf der Außenfläche (12) des zylindrischen Abschnitts (10), der sich etwa bis zur Innenfläche (7) des Mantels (2) erstreckt;
wobei damit ein Fluid-Zirkulationsbereich entlang dem schraubenförmigen Vorsprung (11) zwischen dem Körper (3) und dem Mantel (2) definiert ist, um die Zentrifugierung des Fluids zu erlauben;
wobei die Vorrichtung (1) weiterhin mindestens ein bewegbares Organ (19) umfasst, das auf der Struktur im Zirkulationsbereich montiert ist, wobei das Organ (19) ausgebildet ist, um, wenn es in Ruhestellung ist, im Zirkulationsbereich einen Zirkulationskanal (29) für das Fluid zu bilden mit einem kleineren Querschnitt als der des Zirkulationsbereichs, wobei das Organ (19) von elastischen Mitteln in seine Ruhestellung beansprucht wird und imstande ist, gegen die Struktur heruntergeklappt zu werden, gegen die elastischen Mittel, durch den Fluiddurchgang, so dass sich der Querschnitt des Kanals (29) vergrößert, **dadurch gekennzeichnet, dass** der stromaufwärtige Rand (20) des bewegbaren Organs (19) im Verhältnis zur Struktur starr und etwa parallel zur Achse (6) des Mantels (2) angeordnet ist, wobei der stromaufwärtige Rand (20) eine Gelenkachse des bewegbaren Organs (19) zwischen seiner Ruhestellung und seiner heruntergeklappten Stellung bildet.

2. Reinigungsvorrichtung nach Anspruch 1, **dadurch gekennzeichnet, dass** das bewegbare Organ (19) die Form eines dünnen gekrümmten Teils aufweist, das zwischen dem Mantel (2) und dem Körper (3) angeordnet ist, wobei die Krümmung des Organs (19) etwa der zylindrischen Form des Mantels (2) und des Körpers (3) folgt.

3. Reinigungsvorrichtung nach Anspruch 1 oder 2, **dadurch gekennzeichnet, dass** der untere Rand (23) des bewegbaren Organs (19) eine Form besitzt, die der Form der Oberseite (16) des schraubenförmigen Vorsprungs (11) entspricht, wobei der untere Rand (23) in unmittelbarer Nähe des schraubenförmigen Vorsprungs (11) angeordnet ist.

4. Reinigungsvorrichtung nach einem der Ansprüche 1 bis 3, **dadurch gekennzeichnet, dass** das bewegbare Organ (19) auf dem Körper (3) montiert und ausgebildet ist, um gegen den Körper (3) durch den Durchgang des Fluids herunterklappbar zu sein.

5. Reinigungsvorrichtung nach einem der Ansprüche 2 bis 4, **dadurch gekennzeichnet, dass** das bewegbare Organ (19) elastisch angelenkt ist und durch einen seiner Ränder (20) an einem schlanken Steg (18), der starr auf der Struktur montiert ist, wobei das bewegbare Organ (19) und der Steg (18) aus einem einzigen Teil gefertigt sind und ein Federblatt (5) bilden.

6. Reinigungsvorrichtung nach Anspruch 5, **dadurch gekennzeichnet, dass** das bewegbare Organ (19) und/oder der Steg (18), im Verbindungsbereich mit dem Steg (18), jeweils mit dem bewegbaren Organ (19), eine Öffnung (24) aufweist, die eine elastische Anlenkung erlaubt.

7. Reinigungsvorrichtung nach einem der Ansprüche 1 bis 6, **dadurch gekennzeichnet, dass** der Körper (3) N schraubenförmige Vorsprünge (11) mit identischen Steigungen umfasst, wobei N > 1, wobei sich die stromaufwärtigen Enden (14) der Vorsprünge (11) in der Nähe des oberen Endes (13) des Körpers (3) befinden und regelmäßig auf dem Umfang des Körpers (3) beabstandet sind.

8. Reinigungsvorrichtung nach Anspruch 5 oder 6 und Anspruch 7, **dadurch gekennzeichnet, dass** N=2 und dass das Federblatt (5) zwei bewegbare Organe (19) umfasst, von denen jedes an einem Ende des Stegs (18) derart angelenkt sind, dass etwa ein S gebildet wird, wobei der Steg (18) in einem Schlitz (17) montiert ist, der diametral in den Körper (3) eingearbeitet ist.

9. Reinigungsvorrichtung nach einem der Ansprüche 1 bis 8, **dadurch gekennzeichnet, dass** die starre Struktur weiterhin eine Element zur Verteilung des Fluids (4) umfasst, das im oberen Teil des Körpers (3) montiert und ausgebildet ist, um das eintretende Fluid in Richtung des oder der Fluid-Zirkulationskanäle (29) zu lenken.

10. Reinigungsvorrichtung nach Anspruch 9, **dadurch gekennzeichnet, dass** das Element zur Verteilung des Fluids (4) einen gewölbten Teil (25) umfasst, der das offene obere axiale Ende des Körpers (3) verschließt.

11. Reinigungsvorrichtung nach Anspruch 9 oder 10 und Anspruch 2, **dadurch gekennzeichnet, dass** das Element zur Verteilung des Fluids (4) mindestens eine lokale Kante (26) umfasst, die in montierter Stellung imstande ist, im oberen Teil den Raum (28) zwischen der Struktur und dem bewegbaren Organ (19) auf der dem Fluid-Zirkulationskanal (30) gegenüberstehenden Seite zu verschließen.

12. Reinigungsvorrichtung nach einem der Ansprüche 1 bis 11, **dadurch gekennzeichnet, dass** sich der oder die Vorsprünge (11) ab dem oberen Rand (13) des zylindrischen Abschnitts (10) des Körpers (3) über einen axialen Abstand erstrecken, der kleiner ist als die axiale Höhe des Körpers (3), um im unteren Teil des zylindrischen Abschnitts (10) einen Bereich ohne schraubenförmige Vorsprünge auszubilden.
